# EUROPEAN PATENT SPECIFICATION

(11) **EP 4 002 665 B1**
(45) Date of publication and mention of the grant of the patent: **03.09.2025**
(21) Application number: 20209365.4
(22) Date of filing: 24.11.2020
(51) Int. Cl.: H02M 1/36, H02M 3/335, H05B 45/30, H02M 1/00

(54) **A PRIMARY-SIDE SWITCHED AND ISOLATED CONVERTER**
PRIMÄRSEITIG GESCHALTETER UND ISOLIERTER UMRICHTER
CONVERTISSEUR COMMUTÉ SUR LE CÔTÉ PRIMAIRE ET ISOLÉ

(43) Date of publication of application: 25.05.2022
(73) Proprietor: Tridonic GmbH & Co. KG, 6851 Dornbirn (AT)
(72) Inventor: Santiago, Alekssander, 6850 Dornbirn (AT)
(74) Representative: Rupp, Christian

(56) References cited:
- US-A- 5 764 495
- US-A1- 2002 122 320
- US-A1- 2016 342 182

## Description

### TECHNICAL FIELD OF THE INVENTION

The invention relates to a primary-side switched, isolated converter, in particular, for driving an LED emergency lighting module, and to a method for switching said converter.

### BACKGROUND OF THE INVENTION

State of the art emergency converters typically comprise at least two controllers. Moreover, safety standards require a battery connection in any emergency converter such that each battery replacement should be performed in Separated Extra Low Voltage (SELV) conditions. Therefore, the design of the converter should provide a galvanic (physical) isolation between the electrical grid and the battery connections. This is usually accomplished by using isolated converter topologies such as flyback, forward, LLC, etc.

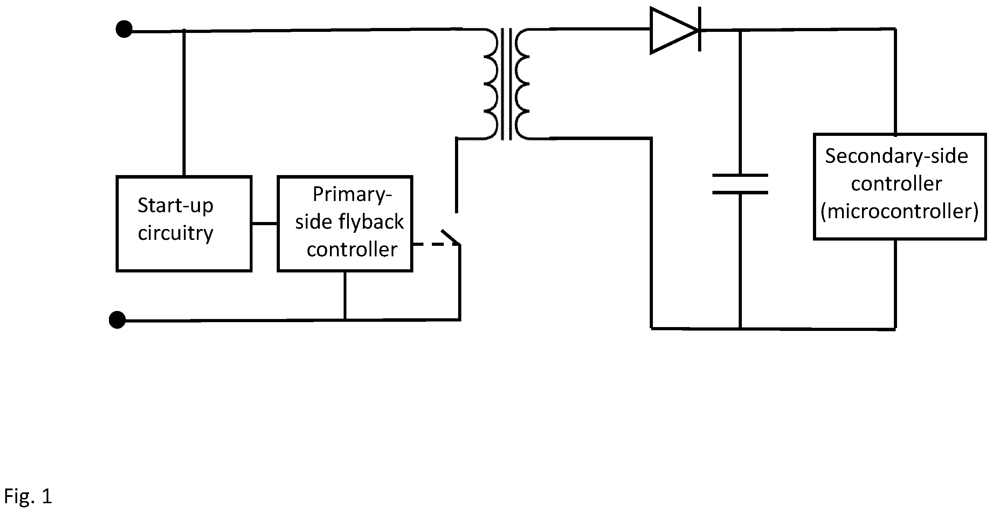

In Fig. 1, a known example of an isolated emergency converter with two controllers and a flyback topology is shown. In general, such an isolated converter requires a first controller (or primary-side controller) in order to operate, such as, for example, an off-the-shelf analog or mixed analog-digital controller. Moreover, a second controller (or secondary-side controller) should be used in order to guarantee the changeover between a maintained and charging operation and an emergency operation, the control of the battery charge, and the lamp operation.

The maintained operation is the operation of the lighting means off the main voltage (in non-emergency state).

For this purpose, a microcontroller is usually used. Therefore, at least two controllers are present in such emergency converters of the prior art.

In order to control an isolated, primary side switched DC-DC converter by a secondary side controller, there is an issue regarding the start-up of this controller from an OFF mode to a full operation mode. After all, the secondary side controller is supplied by a secondary side voltage which is only present once the switched converter has start its operation, as controlled by said secondary side controller.

Therefore, in view of the above mentioned prior art converters, the following question arises: how to turn ON the secondary-side controller from an unpowered mode or OFF mode to a full operation mode.

In general, a start-up circuit for such a secondary side controller plays a significant role in voltage and current reference circuits. The start-up circuit brings out the reference circuit from a dead (zero current) operating point to its normal operating point and, then, is no longer used once the reference circuit starts operating properly. A conventional start-up circuit continues to consume constant current even after giving start-up and, thus, increases the total power consumption of the circuit. This power can be significant when multiple numbers of bias generator circuits are employed in a single chip, consequently reducing battery life.

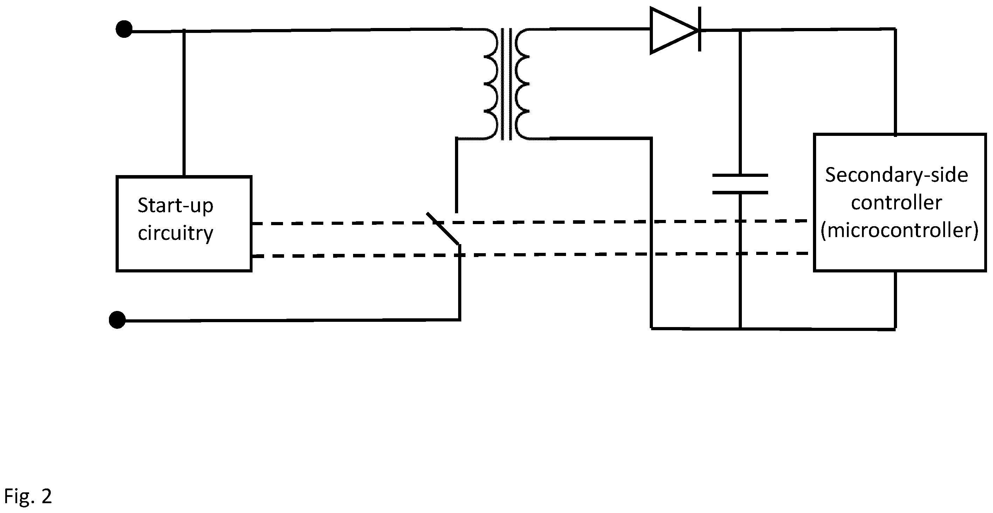

Moreover, most isolated DC-DC converters are primary-side controlled due to the start-up supply (see Fig. 2). When starting-up, the circuit should be energized before the switching of the converter starts. This is normally achieved by drawing current directly from the rectified mains. This also means that the secondary-side controller, disadvantageously, becomes impractical, and many time difficult or expensive to implement. Therefore, a prior art solution provides a start-up oscillating circuit that drives the switching of the isolated converter initially (see Fig. 2), thus establishing a secondary side voltage which can be used to supply the secondary side control circuitry. Then this known start up circuit transfers the control of the switching of the isolated converter to the secondary-side controller.

However, this approach requires anyway a controller. In some cases, integrated circuits can be used, in other cases use is made of discrete components. Moreover, this circuit can be expensive, difficult to control, and unreliable. Furthermore, if the handover of the control does not happen correctly, both controller could try, and act over the same switch, and this might have destructive consequences.

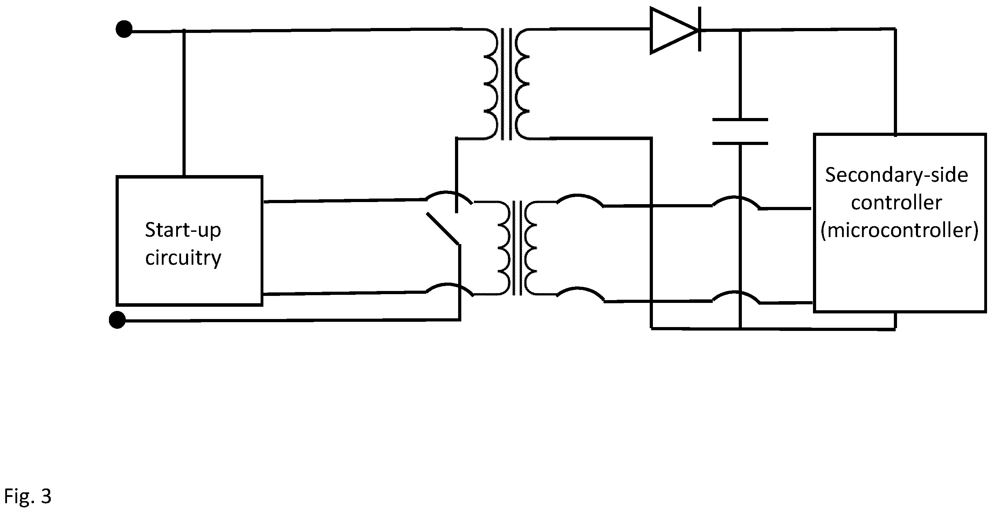

As shown in Fig. 3, some circuits may also use a secondary transformer in order to transfer energy to the secondary-side controller. In particular, in the OFF mode, the secondary-side controller has no supply. In fact, since there is a physical separation between the primary-side and the secondary-side, there is no energy in order to power-up the secondary-side controller. Therefore, this solution provides a separate transformer that transfers a small amount of energy to start-up the secondary-side controller. This can be done with a high frequency transformer, and an oscillating circuit, or a low frequency transformer without power electronics. However, this approach is expensive due to the fact that, effectively, there are two converters in parallel, requiring a galvanic isolation, and some level of control, especially if a low frequency transformer is used.

As it can be taken from above, the vast majority of converters, such as in LED lighting means, uses primary-side controllers, irrespective of the presence of a secondary-side controller, limited by the need for a biasing energy to start the controller. Applications with secondary-side controllers may also use an additional transformer, in particular an isolation transformer, and additional circuitry to draw energy form the primary-side to the secondary-side. However, afterwards, the circuit is not used anymore. US 2016/342182 A1 discloses a primary-side switched isolated converter according to the preamble of independent claim 1.

Therefore, disadvantageously, the state of the art solutions require the presence of a primary-side controller, irrespective of the presence of a secondary-side transformer or provide more expensive solution with an additional isolation transformer in order to provide bias to the secondary-side controller.

Thus, it is an objective to provide for an improved LED converter comprising a secondary-side controller which, in particular, overcomes at least partially the above mentioned disadvantages.

### SUMMARY OF THE INVENTION

The object of the present invention is achieved by the solution provided in the enclosed independent claims. Advantageous implementations of the present invention are further defined in the dependent claims.

According to a first aspect, the invention relates to a primary-side switched, isolated converter for supplying an LED load, having a primary-side having terminals for supplying a mains voltage, a secondary-side controller arranged on a secondary-side of the isolated converter, wherein the secondary-side controller is configured to issue a control signal for a primary-side switch of the switched isolated converter, a secondary-side circuitry on the secondary-side of the converter comprises terminals configured to directly or indirectly supply the LED load, and a battery configured to supply the secondary-side circuitry, and a start-up circuitry configured to supply the secondary-side controller off the battery, wherein the start-up circuitry has a control terminal for supplying a start-up signal transmitted from the primary-side to the secondary-side via an isolation stage of the converter.

This achieves the advantage that a controller is provided in the secondary-side which reduces costs by combining the operation of a primary-side controller and a secondary-side controller in a single controller. Another advantage is the direct access to the feedback signals such as voltages and currents.

According to the invention, the isolated converter comprises a secondary-side switch, wherein the secondary-side controller is not configured to control the secondary-side switch.

According to an embodiment, the primary-side of the isolated converter does not comprise a switch control circuitry.

This provides the advantage that the complexity of the converter is reduced.

According to an embodiment, the isolation stage comprises an optocoupler.

This provides the advantage that a simple, and cheap device, such as an optocoupler, can be used to transmit the start-up signal in the isolation stage.

According to an embodiment, the isolation stage comprises a transformer.

According to an embodiment, the switched isolated converter is a flyback-, forward-, or LLC-converter.

This provides the advantage that well known typologies of converters can be used.

According to an embodiment, the secondary-side controller is a microcontroller.

According to an embodiment, the primary-side switched isolated converter is designed as an emergency lighting LED converter.

This provides the advantage that the battery, which is needed for the emergency operation of the emergency lighting LED converter, can be used. Thus, the energy which is necessary for the start-up of the secondary-side converter can be taken off from this battery.

According to an embodiment, the battery is configured to be connected such that the LED load is driven off the battery.

According to the invention, the start-up signal is supplied to an input terminal of a control terminal of the secondary-side switch, such as e.g. a transistor, which, upon being supplied by the start-up signal, is configured to connect the battery to a voltage supply terminal of the secondary-side controller.

This provides the advantage that a component, such as the battery, which is already present in the circuitry of e.g. emergency converters, can be used in order to start-up the secondary-side converter. Thus, this reduces the complexity of the circuitry of the converter.

According to a second aspect, the invention relates to a LED module comprising a primary-side switched isolated converter for supplying an LED load according to the first aspect and anyone of the implementation forms thereof and a LED load.

According to a third aspect, the invention relates to a method for switching a primary-side isolated converter for supplying an LED load, comprising the following steps: supplying a mains voltage; issuing a control signal for a primary-side switch of the isolated converter from a secondary-side controller of the isolated converter; supplying a secondary-side controller of the isolated converter from a start-up circuitry off a battery, wherein the start-up circuitry has a control terminal for supplying a start-up signal transmitted from the primary-side to the secondary-side via an isolation stage of the converter; and supplying directly or indirectly the LED load.

The method according to the third aspect provides the same advantages as the converter according to the first aspect.

### BRIEF DESCRIPTION OF THE DRAWINGS

The invention will be explained in the followings together with the figures.
- Fig. 1: shows a schematic representation of a topology of an LED converter according to prior art;
- Fig. 2: shows a further schematic representation of a topology of an LED converter according to prior art;
- Fig. 3: shows a further schematic representation of a topology of an LED converter according to prior art;
- Fig. 4: shows an exemplary embodiment of an LED, primary-side switched, isolated converter according to an embodiment;
- Fig. 5: shows a further exemplary embodiment of an LED, primary-side switched, isolated converter according to an embodiment;
- Fig. 6: shows a further exemplary embodiment of an LED, primary-side switched, isolated converter according to an embodiment; and
- Fig. 7: shows a schematic representation of a method for driving an LED module according to an embodiment.

### DETAILED DESCRIPTION OF THE PREFERRED EMBODIMENTS

Aspects of the present invention are described herein in the context of an LED converter.

The present invention is described more fully hereinafter with reference to the accompanying drawings, in which various aspects of the present invention are shown. This invention however may be embodied in many different forms and should not be construed as limited to the various aspects of the present invention presented through this disclosure. Rather, these aspects are provided so that this disclosure will be thorough and complete, and will fully convey the scope of the present invention to those skilled in the art. The various aspects of the present invention illustrated in the drawings may not be drawn to scale. Rather, the dimensions of the various features may be expanded or reduced for clarity. In addition, some of the drawings may be simplified for clarity. Thus, the drawings may not depict all of the components of a given apparatus.

Various aspects of an LED converter will be presented. However, as those skilled in the art will readily appreciate, these aspects may be extended to aspects of LED converters without departing from the invention.

The term "LED luminaire" shall mean a luminaire with a light source comprising one or more LEDs and/or OLEDs.

It is further understood that the aspect of the present invention might contain integrated circuits that are readily manufacturable using conventional semiconductor technologies, such as complementary metal-oxide semiconductor technology, short "CMOS". In addition, the aspects of the present invention may be implemented with other manufacturing processes for making optical as well as electrical devices. Reference will now be made in detail to implementations of the exemplary aspects as illustrated in the accompanying drawings. The same references signs will be used throughout the drawings and the following detailed descriptions to refer to the same or like parts.

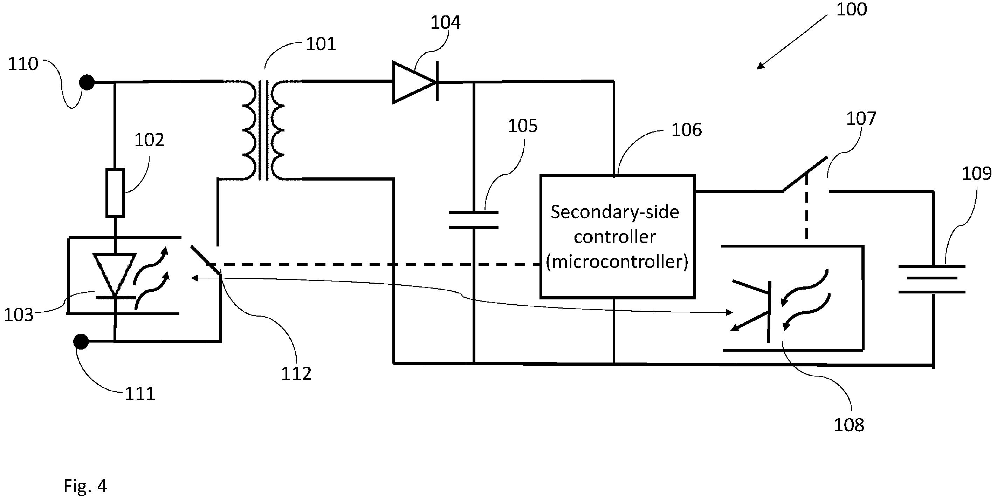

Now referring to Fig. 4, an exemplary embodiment of an LED converter 100 according to an embodiment of the invention is shown.

Fig. 4 shows a flyback converter as an example of a primary-side switched, isolated converter 100 for supplying an LED load (not shown in Fig. 4). The converter 100 comprises: primary-side terminals 110, 111 for supplying a mains voltage, a secondary-side controller 106 arranged on a secondary-side of the isolated converter 100, wherein the secondary-side controller 106 is configured to issue a control signal for a primary-side switch 112 of the switched isolated converter 100. Thus, the control signal crosses the isolation barrier from the secondary side to the primary side of the converter.

Moreover, a secondary-side circuitry on the secondary-side of the converter 100 comprises: terminals configured to directly or indirectly supply the LED load, and a battery 109 configured at least to supply the secondary-side circuitry, and a start-up circuitry 103, 108 configured to supply the secondary-side controller 106 off the battery 109, wherein the start-up circuitry 103, 108 has a control terminal for supplying a start-up signal transmitted from the primary-side to the secondary-side via an isolation stage of the converter 101.

Typically, the converter 100 is an emergency lighting converter. In this case, this battery 109, or one or more additional batteries are used to drive the lighting means once the main voltage fails. The batteries on the secondary side are typically charged off the mains voltage, using the shown e.g. flyback converter or any other suited charging circuit. The charging of the batteries may also be controlled by the secondary-side controller 106.

The converter 100 can be a maintained mode energy LED-converter as well as a non-maintained mode energy converter. The maintained mode emergency converter 100 is a converter configured to provide with energy the LED-module (off the mains voltage) in the case where the mains is active, and in an emergency case of a failure of the mains (off one or more batteries). In this embodiment, a recharge of the battery 109 may be necessary, as soon as the mains is available again. Moreover, in this case, the converter 100 should be high started in order to make sure that the illumination takes place.

The non-maintained mode refers to a mode wherein the converter 100 is configured to maintain the LED module n case of an emergency, when a failure of the mains occurs. In this embodiment, a recharge of the battery 109 may be necessary, as soon as the mains is available again.

Moreover, the converter 100 can be used to monitor the presence of the mains, so to recognize if, and which, voltage is available at the input terminals of the converter 100.

Advantageously, a solution to bias the start-up circuit 103, 108 of the isolated converter 100 is proposed comprising the secondary-side controller 106, in particular, in battery powered devices. This is applicable for any topology of converter 100 with a galvanic isolation, such as flyback, forward, push-pull, SEPIC, half-bridge, etc.

In an embodiment, the converter 100 is an emergency converter, having the secondary-side controller 106 and obviously also the secondary-side battery 109 for powering the LED lighting means. Therefore, some embodiments, especially, deal with the supply of the power and energy for the secondary-side controller 106.

The isolated signal transmission path is provided from the primary-side having the start-up circuit 103, 108 to the secondary-side (see Fig. 4), wherein on the secondary-side, the signal from the isolated signal transmission path triggers the power up from of the secondary-side controller 106 off the secondary-side battery 109.

In an embodiment, also a transformer could be used to make the start-up signal cross the isolation barrier, however, this is more costly than the preferred implementation using an optocoupler 103, 108 or the isolated signal transmission.

Preferably, the secondary-side controller 106 may control the primary-side switch 112 which controls the power transmission across the main transformer 101.

Advantageously, assuming the presence of a battery 109, there is no need for an energy transfer from the primary-side to the secondary-side. Only a control signal is needed. In particular, in power-down mode, the battery 109 is disconnected from the secondary-side controller 106 via a controlled switch 107 (e.g., a transistor such as e.g.a MOSFET). To start-up the device 100 from the battery 109, the control signal is used to turn ON (i.e. conductive) the secondary-side switch 107 and allow the energy to flow from the battery 109 to the secondary-side controller 106. The controller 106 will the start the operation of the primary-side switch of the converter, such that energy is transferred to the secondary side. Thus a voltage will be established at the secondary side which can be used to supply the controller 106 after the start-up phase, thus that the supply off the battery, in one example, will be stopped, e.g. interrupted.

This provides the advantage that a simple and relatively small device 103, 108 (smaller than any SELV transformer), can be activated by the presence of mains voltage (diode side) and it can be configured to turn ON the secondary-side switch 107 that connects the battery 109 to the secondary-side controller supply 106. From this point, the controller 106 can start e.g., an AC-DC converter 100 for normal operation and stop using the energy of the battery.

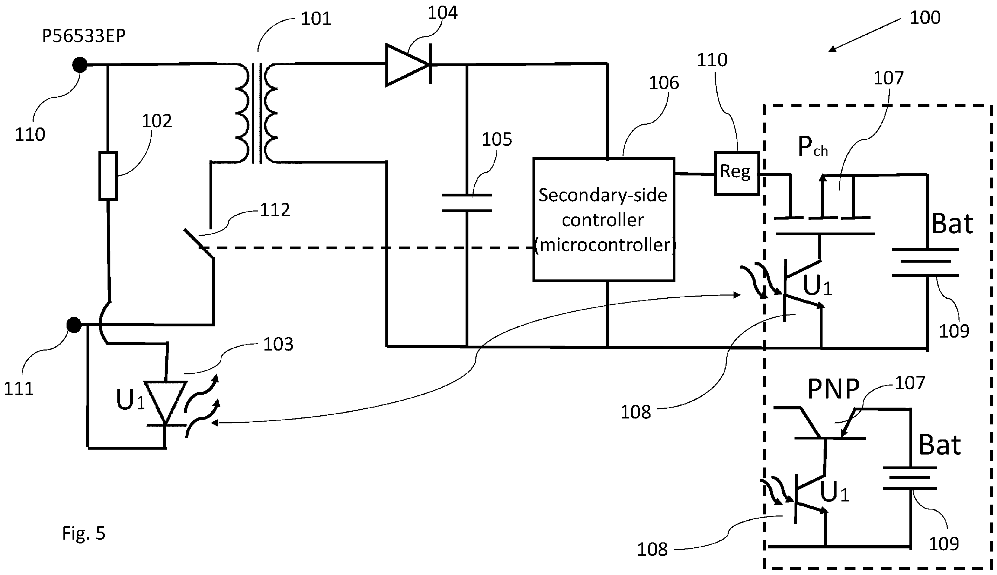

For example, the switch 107 can be a P-channel MOSFET switch (see Fig. 5). In yet another embodiment, the switch 107 can be a PNP battery switch 107. In a yet another example, a regulator 110 (see Fig. 5) between the battery 109 and the controller 106, e.g., a microcontroller supply, is provided, since the battery voltage has a wide range, and the microcontroller only works at a specific value.

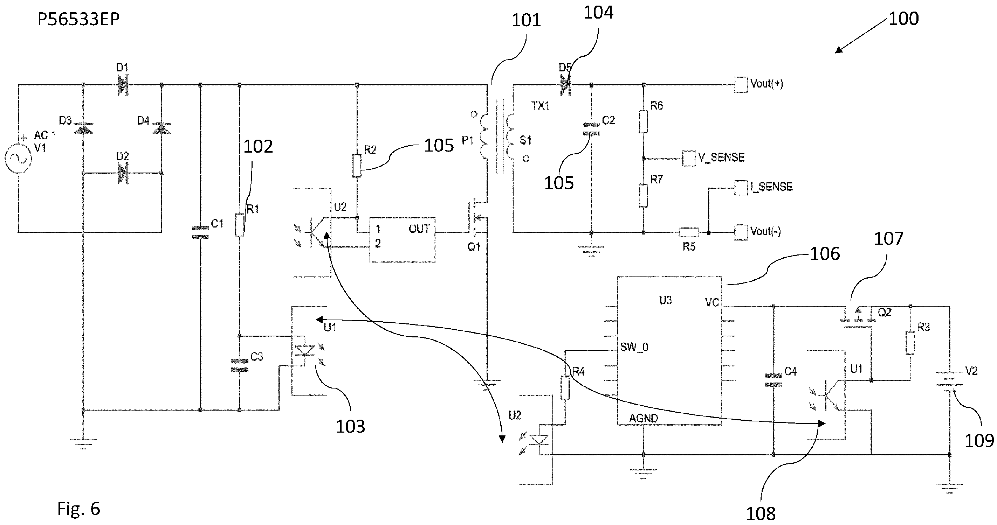

Therefore, some embodiments make use of the existing battery 109 (e.g., in emergency converters) to bias the secondary-side controller 106, before the converter 100 starts switching. The biasing circuit can be executed with standard cheap components like optocoupler 103, 108 and MOSFETS 107. The circuit 100 is controlled by the presence or absence of the main electric supply V1 (see also description of Fig. 6).

Thus, advantageously, there is no need to use two controllers, since only a controller 106 may be arranged on the secondary-side of the converter 100, as is the case of emergency lighting means. In fact, in the case of emergency lighting means, a secondary-side controller 106 is used in order to operate the battery charge, and the emergency light.

This provides the advantage that it is cheaper to use only one controller 106 in the LED converter 100 than two, as is the case of the prior art solutions.

Moreover, in the schematic representations shown in Fig. 4 and Fig. 5, the converter 100 further comprises a resistor 102, the transformer 101, a rectifying diode 104, and a smoothing capacitor 105.

Fig. 6 shows a further exemplary embodiment of an LED converter 100 according to an embodiment.

In this embodiment, the mains V1 is used in order to turn on the switch 107 connected to the battery 109 that is configured to provide supply to the secondary-side controller 106 during the start-up of the converter 100. In this way, the secondary-side switch 107 can be controlled through the isolation barrier 101. The example presented uses optocouplers 103 (U1), 108 (U1) and U2, U2, but other means might be used, such as a transformer.

The mains voltage V1 passes through a rectifier comprising the diodes D1, D2, D3, and D4. Afterwards, the resulting signal passes through a first capacitor C1 in parallel to a resistor R1, and a further capacitor C3. Moreover, when the mains V1 is present, the diode U1 is polarized, turning the secondary-side switch Q2 on.

The battery 109 can be connected to the controller supply directly or indirectly through a regulator 110 (as shown in the embodiment of Fig. 5), turning on the secondary-side controller 106. A microcontroller can be used as the secondary controller 106, U3. In general, batteries 109 have enough voltage to start-up the microcontroller or controller 106. However, if the design requires higher voltage than the battery 109 can supply, than a voltage step-up regulator can be used, such a charge pump or boost regulator.

The start-up signal can be supplied to an input terminal of a control terminal of the secondary-side switch 107, such as e.g. a transistor, which, upon being supplied by the start-up signal, is configured to connect the battery 109 to a voltage supply terminal of the secondary-side controller 106.

From this point, the controller 107 can start switching the mains switch Q1 of the converter 100 through an isolated converter, using the optocoupler or a gate converter transformer. The same microcontroller can drive a lamp or the battery charger, advantageously eliminating the need for another controller.

In an example, only the battery 109 is required for the converter 100 to start. Moreover, once the converter 100 is operating, the battery 109 can be removed.

Moreover, the converter 100 shown in Fig. 6 comprises a transformer 101, a smoothing capacitor 105 and a rectifying diode D5.

Summarizing, a circuit is provided to power up a secondary-side controller 106 of an, e.g., insulated DC/DC converter 100 using a battery 109 as source of energy, wherein:
1. The circuit 100 is controlled by the presence or absence of input main supply V1, the electrical grid;
2. The circuit 100 is disabled in the absence of input main supply V1, the electrical grid;
3. The circuit 100 works across the electrical insulation barrier 101;
4. The controller mechanism can be via optically insulated switch or coupled inductors;
5. The circuit 100 draws current from long term storage device such as a battery 109 or super capacitor;
6. The circuit 100 does not drain the energy of the storage device or battery 109 unless activated by input main supply V1, the electrical grid;
7. The circuit 100 supplies enough energy to start-up the secondary-side controller 106 directly or indirectly through voltage regulators; and
8. The circuit can be disabled after the start-up process.

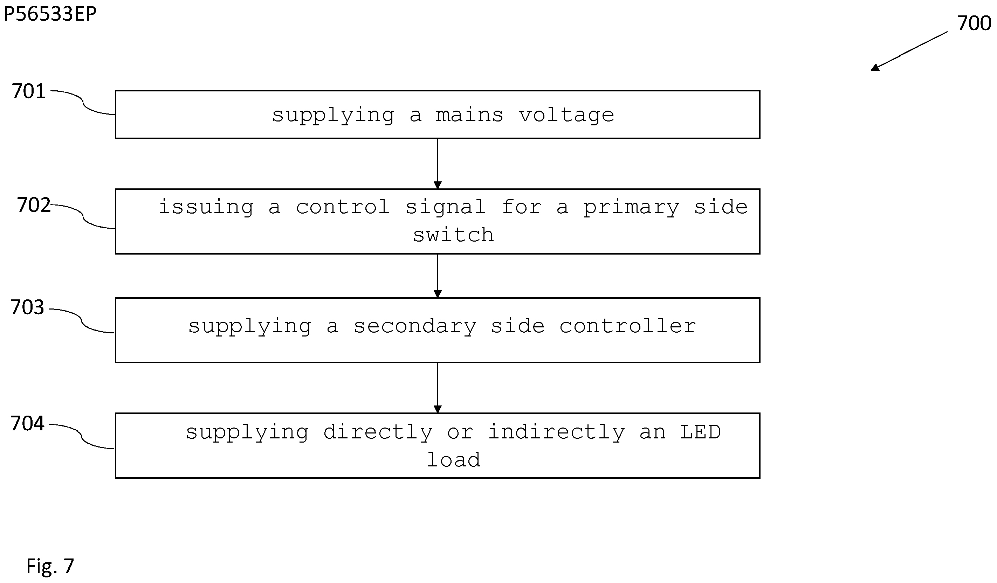

Fig. 7 shows a schematic representation of a method 700 for driving an LED according an embodiment.

The method 700 for switching a primary-side isolated converter for supplying an LED load comprises the following steps:
- supplying 701 a mains voltage;
- issuing 702 a control signal for a primary-side switch of the isolated converter from a secondary-side controller of the isolated converter;
- supplying 703 a secondary-side controller of the isolated converter from a start-up circuitry off a battery, wherein the start-up circuitry has a control terminal for supplying a start-up signal transmitted from the primary-side to the secondary-side via an isolation stage of the converter; and
- supplying 704 directly or indirectly the LED load.

## Claims

1. A primary-side switched, isolated converter (100) for supplying an LED load, having:
- a primary-side having terminals (110, 111) for supplying a mains voltage (V1),
- a secondary-side controller (106) arranged on a secondary-side of the isolated converter (100), wherein the secondary-side controller (106) is configured to issue a control signal for a primary-side switch (Q1, 112) of the switched isolated converter (100);
- a secondary-side circuitry on the secondary-side of the converter (100) comprises:
∘ terminals (Vout) configured to directly or indirectly supply the LED load, and
∘ a battery (109) configured to supply the secondary-side circuitry, and
- a start-up circuitry (103, 108) configured to supply the secondary-side controller (106) off the battery (109), **characterized in that**
the start-up circuitry (103, 108) has a control terminal for supplying a start-up signal transmitted from the primary-side to the secondary-side via an isolation stage (101) of the converter (100), wherein
the isolated converter (100) comprises a secondary-side switch (107),
the secondary-side controller (106) is not configured to control the secondary-side switch (107), and
the start-up signal is supplied to an input terminal of a control terminal of the secondary-side switch (107) which, upon being supplied by the start-up signal, is configured to connect the battery (109) to a voltage supply terminal of the secondary-side controller (106).

2. The primary-side switched isolated converter (100) of claim 1, wherein the primary-side of the isolated converter (100) does not comprise a switch control circuitry.

3. The primary-side switched isolated converter (100) of any one of the preceding claims, wherein the isolation stage (101) comprises an optocoupler (103, 108).

4. The primary-side switched isolated converter (100) of any one of the preceding claims, wherein the isolation stage (101) comprises a transformer.

5. The primary-side switched isolated converter (100) of any one of the preceding claims, wherein the switched isolated converter (100) is a flyback-, forward-, or LLC-converter.

6. The primary-side switched isolated converter (100) of any one of the preceding claims, wherein the secondary-side controller (106) is a microcontroller.

7. The primary-side switched isolated converter (100) of any one of the preceding claims, wherein the isolated converter (100) is designed as an emergency lighting LED converter.

8. The primary-side switched isolated converter (100) of claim 7, wherein the battery (109) is configured to be connected such that the LED load is driven off the battery (109).

9. A LED module comprising a primary-side switched isolated converter (100) for supplying an LED load according to any one of the claims 1 to 8 and a LED load.

10. A method (700) for switching a primary-side isolated converter (100) for supplying an LED load, comprising:
- supplying (701) a mains voltage (V1);
- issuing (702) a control signal for a primary-side switch (112) of the isolated converter (100) from a secondary-side controller (106) of the isolated converter (100);
- supplying (703) the secondary-side controller (106) of the isolated converter (100) from a start-up circuitry off a battery (109), wherein the start-up circuitry has a control terminal for supplying a start-up signal transmitted from the primary-side to the secondary-side via an isolation stage (101) of the converter (100); and
- supplying (704) directly or indirectly the LED load,
**characterized in that**
the isolated converter (100) comprises a secondary-side switch (107),
the secondary-side controller (106) is not configured to control the secondary-side switch (107), and
the start-up signal is supplied to an input terminal of a control terminal of the secondary-side switch (107) which, upon being supplied by the start-up signal, connects the battery (109) to a voltage supply terminal of the secondary-side controller (106).

## Patentansprüche

1. Primärseitig geschalteter, isolierter Konverter (100) zur Versorgung einer LED-Last, aufweisend:
- eine Primärseite mit Anschlüssen (110, 111) zum Zuführen einer Netzspannung (V1),
- einen sekundärseitigen Controller (106), der auf einer Sekundärseite des isolierten Konverters (100) angeordnet ist, wobei der sekundärseitige Controller (106) dazu konfiguriert ist, ein Steuersignal für einen primärseitigen Schalter (Q1, 112) des geschalteten isolierten Konverters (100) auszugeben;
- eine sekundärseitige Schaltung auf der Sekundärseite des Konverters (100) umfasst:
∘ Anschlüsse (Vout), die so konfiguriert sind, dass sie die LED-Last direkt oder indirekt versorgen, und
∘ eine Batterie (109), die so konfiguriert ist, dass sie die sekundärseitige Schaltung versorgt, und
- eine Startschaltung (103, 108), die so konfiguriert ist, dass sie den sekundärseitigen Controller (106) aus der Batterie (109) versorgt,
**dadurch gekennzeichnet, dass** die Startschaltung (103, 108) einen Steueranschluss zum Zuführen eines Startsignals aufweist, das von der Primärseite über eine Isolationsstufe (101) des Konverters (100) an die Sekundärseite übertragen wird, wobei der isolierte Konverter (100) einen sekundärseitigen Schalter (107) umfasst,
der sekundärseitige Controller (106) nicht dazu konfiguriert ist, den sekundärseitigen Schalter (107) zu steuern, und
das Startsignal einem Eingangsanschluss eines Steueranschlusses des sekundärseitigen Schalters (107) zugeführt wird, der bei Versorgung mit dem Startsignal dazu ausgebildet ist, die Batterie (109) mit einem Spannungsversorgungsanschluss des sekundärseitigen Reglers (106) zu verbinden.

2. Primärseitig geschalteter isolierter Konverter (100) nach Anspruch 1, wobei die Primärseite des isolierten Konverters (100) keine Schaltersteuerschaltung umfasst.

3. Primärseitig geschalteter isolierter Konverter (100) nach einem der vorhergehenden Ansprüche, wobei die Isolationsstufe (101) einen Optokoppler (103, 108) umfasst.

4. Primärseitig geschalteter isolierter Konverter (100) nach einem der vorhergehenden Ansprüche, wobei die Isolationsstufe (101) einen Transformator umfasst.

5. Primärseitig geschalteter isolierter Konverter (100) nach einem der vorhergehenden Ansprüche, wobei der geschaltete isolierte Konverter (100) ein Flyback-, Forward- oder LLC-Konverter ist.

6. Primärseitig geschalteter isolierter Konverter (100) nach einem der vorhergehenden Ansprüche, wobei der sekundärseitige Controller (106) ein Mikrocontroller ist.

7. Primärseitig geschalteter isolierter Konverter (100) nach einem der vorhergehenden Ansprüche, wobei der isolierte Konverter (100) als Notbeleuchtungs-LED-Konverter ausgelegt ist.

8. Primärseitig geschalteter isolierter Konverter (100) nach Anspruch 7, wobei die Batterie (109) so konfiguriert ist, dass sie so angeschlossen wird, dass die LED-Last von der Batterie (109) gespeist wird.

9. LED-Modul, das einen primärseitig geschalteten isolierten Konverter (100) zum Versorgen einer LED-Last nach einem der Ansprüche 1 bis 8 und eine LED-Last umfasst.

10. Verfahren (700) zum Schalten eines primärseitig isolierten Konverters (100) zum Versorgen einer LED-Last, umfassend:
- Versorgen (701) mit einer Netzspannung (V1),
- Ausgeben (702) eines Steuersignals für einen primärseitigen Schalter (112) des isolierten Konverters (100) von einem sekundärseitigen Controller (106) des isolierten Konverters (100);
- Versorgen (703) des sekundärseitigen Reglers (106) des isolierten Konverters (100) über eine Startschaltung aus einer Batterie (109), wobei die Startschaltung einen Steueranschluss zum Versorgen mit einem Startsignals aufweist, das von der Primärseite über eine Isolationsstufe (101) des Konverters (100) an die Sekundärseite übertragen wird; und
- Versorgen (704) der LED-Last direkt oder indirekt,
**dadurch gekennzeichnet, dass**
der isolierte Konverter (100) einen sekundärseitigen Schalter (107) umfasst,
der sekundärseitige Controller (106) nicht dazu konfiguriert ist, den sekundärseitigen Schalter (107) zu steuern, und
das Startsignal einem Eingangsanschluss eines Steueranschlusses des sekundärseitigen Schalters (107) zugeführt wird, der bei Versorgung mit dem Startsignal, die Batterie (109) mit einem Spannungsversorgungsanschluss
des sekundärseitigen Reglers (106) verbindet.

## Revendications

1. Convertisseur à découpage isolé côté primaire (100) pour alimenter une charge LED, présentant :
- un côté primaire présentant des bornes (110, 111) pour l'alimentation d'une tension de secteur (V1),
- un contrôleur côté secondaire (106) disposé sur un côté secondaire du convertisseur isolé (100), dans lequel le contrôleur côté secondaire (106) est configuré pour émettre un signal de commande pour un commutateur côté primaire (Q1, 112) du convertisseur à découpage isolé (100) ;
- un circuit côté secondaire sur le côté secondaire du convertisseur (100) comprend :
∘ des bornes (Vout) configurées pour alimenter directement ou indirectement la charge LED, et
∘ une batterie (109) configurée pour alimenter le circuit côté secondaire, et
- un circuit de démarrage (103, 108) configuré pour alimenter le contrôleur côté secondaire (106) à partir de la batterie (109) **caractérisé en ce que** le circuit de démarrage (103, 108) présente une borne de commande pour fournir un signal de démarrage transmis du côté primaire vers le côté secondaire via un étage d'isolation (101) du convertisseur (100), dans lequel le convertisseur isolé (100) comprend un commutateur côté secondaire (107),
le contrôleur côté secondaire (106) n'est pas configuré pour commander le commutateur côté secondaire (107), et
le signal de démarrage est fourni à une borne d'entrée d'une borne de commande du commutateur côté secondaire (107) qui, lorsqu'il est alimenté par le signal de démarrage, est configuré pour connecter la batterie (109) à une borne d'alimentation en tension du contrôleur côté secondaire (106).

2. Convertisseur à découpage isolé côté primaire (100) selon la revendication 1, dans lequel le côté primaire du convertisseur isolé (100) ne comprend pas de circuit de commande de commutation.

3. Convertisseur à découpage isolé côté primaire (100) selon l'une quelconque des revendications précédentes, dans lequel l'étage d'isolation (101) comprend un optocoupleur (103, 108).

4. Convertisseur à découpage isolé côté primaire (100) selon l'une quelconque des revendications précédentes, dans lequel l'étage d'isolation (101) comprend un transformateur.

5. Convertisseur à découpage isolé côté primaire (100) selon l'une quelconque des revendications précédentes, dans lequel le convertisseur à découpage isolé (100) est un convertisseur flyback, forward ou LLC.

6. Convertisseur à découpage isolé côté primaire (100) selon l'une quelconque des revendications précédentes, dans lequel le contrôleur côté secondaire (106) est un microcontrôleur.

7. Convertisseur à découpage isolé côté primaire (100) selon l'une quelconque des revendications précédentes, dans lequel le convertisseur isolé (100) est conçu comme un convertisseur de LED d'éclairage d'urgence.

8. Convertisseur à découpage isolé côté primaire (100) selon la revendication 7, dans lequel la batterie (109) est configurée pour être connectée de telle manière que la charge LED est alimentée à partir de la batterie (109).

9. Module LED comprenant un convertisseur à découpage isolé côté primaire (100) pour alimenter une charge LED selon l'une quelconque des revendications 1 à 8 et une charge LED.

10. Procédé (700) de commutation d'un convertisseur isolé côté primaire (100) pour alimenter une charge LED, comprenant :
- l'alimentation (701) d'une tension de secteur (V1) ;
- l'émission (702) d'un signal de commande pour un commutateur côté primaire (112) du convertisseur isolé (100) à partir d'un contrôleur côté secondaire (106) du convertisseur isolé (100) ;
- l'alimentation (703) du contrôleur côté secondaire (106) du convertisseur isolé (100) à partir d'un circuit de démarrage d'une batterie (109), dans lequel le circuit de démarrage présente une borne de commande pour fournir un signal de démarrage transmis du côté primaire vers le côté secondaire via un étage d'isolation (101) du convertisseur (100) ; et
- l'alimentation (704) directe ou indirecte de la charge LED, **caractérisé en ce que**
le convertisseur isolé (100) comprend un commutateur côté secondaire (107),
le contrôleur côté secondaire (106) n'est pas configuré pour commander le commutateur côté secondaire (107), et
le signal de démarrage est fourni à une borne d'entrée d'une borne de commande du commutateur côté secondaire (107)
qui, lorsqu'elle est alimentée par le signal de démarrage, connecte
la batterie (109) à une tension
de la borne d'alimentation du contrôleur du côté secondaire (106).
